Europäisches Patentamt

European Patent Office

Office européen des brevets

(11) Numéro de publication: **0 312 169**
**A1**

(12) **DEMANDE DE BREVET EUROPEEN**

(21) Numéro de dépôt: **88202262.7**

(22) Date de dépôt: **11.10.88**

(51) Int. Cl.⁴: **C08J 5/12 , B29C 65/02 , A61J 1/00**

(30) Priorité: **15.10.87 BE 8701182**

(43) Date de publication de la demande:
**19.04.89 Bulletin 89/16**

(84) Etats contractants désignés:
**AT BE CH DE ES FR GB GR IT LI LU NL SE**

(71) Demandeur: **SOLVAY & Cie (Société Anonyme)**
**Rue du Prince Albert, 33**
**B-1050 Bruxelles(BE)**

(72) Inventeur: **Dalle Vedove, Walter**
**Rue Banning, 54**
**B-1050 Bruxelles(BE)**
Inventeur: **Grandjean, Dominique**
**Rue des Bons Enfants 2/8**
**B-1120 Bruxelles(BE)**

(54) **Procédé pour le soudage de feuilles de polychlorure de vinyle souple et articles, notamment poches à usage médical, obtenus par ce procédé.**

㊺ Procédé pour le soudage d'une feuille à base de polychlorure de vinyle souple dont la face impliquée dans la soudure a été soumise à un traitement par plasma froid générant une couche superficielle réticulée, avec un autre objet façonné également à base de polychlorure de vinyle souple, selon lequel on développe au cours du soudage la combinaison d'un énergie et d'une pression au moins suffisante pour désintégrer substantiellement la couche réticulée dans la soudure.

Le procédé a des caractéristiques le rendant particulièrement apte à la réalisation des poches à usage médical, dnt les soudures résistent à la stérilisation en autoclave.

FIGURE 2

# Procédé pour le soudage de feuilles de polychlorure de vinyle souple et articles, notamment poches à usage médical, obtenus par ce procédé

La présente invention concerne un procédé pour le soudage de feuilles de polychlorure de vinyle souple dont au moins une face impliquée dans la soudure a été soumise à un traitement de réticulation par plasma froid. Elle concerne également les articles, plus particulièrement les sacs ou poches à usage médical, obtenus par ce procédé.

Il est bien connu que la fine couche réticulée que forme, à la surface des polymères vinyliques chlorés, le traitement par plasma froid d'un gaz, agit comme une barrière empêchant la migration des composés à bas poids moléculaire contenus dans ces polymères, tels que divers additifs, et surtout le plastifiant.

La barrière que constitue cette fine couche réticulée est particulièrement bienvenue lorsque le polymère vinylique chloré est transformé en articles d'emballage et de conditionnement de substances, telles que des liquides alimentaires ou médicaux dont il faut éviter tout contact avec certains ingrédients, notamment les plastifiants, présents dans le polymère. Le polychlorure de vinyle (PVC) souple, lorsqu'il est traité en surface par plasma froid d'un gaz, constitue dès lors à ce titre un matériau de choix pour la fabrication de pareils articles.

La fabrication d'articles d'emballage à partir de PVC souple, traité par plasma froid d'un gaz, implique le plus souvent que l'on doive souder entre elles les feuilles à partir desquelles les articles sont réalisés.

Cette soudure doit souvent répondre à des exigences sévères, surtout lorsque l'article est destiné à des usages médicaux. Ainsi, elle doit pouvoir résister à des traitements à haute température, tels que les traitements de stérilisation de l'article, le plus souvent effectués à plus de 120°C pendant plusieurs dizaines de minutes. Elle doit aussi avoir des caractéristiques mécaniques propres à assurer sa résistance à l'arrachage et à la délamination.

Or, les conditions générales mises en oeuvre conventionnellement pour souder des feuilles de PVC souple, le plus souvent par un procédé à haute fréquence, se sont révélées ne pas convenir lorsque la soudure doit se faire via la face de ces feuilles qui a été traitée par plasma froid. Ce problème est évoqué notamment dans le document FR-A-2544612 (TERUMO K.K.); on y mentionne que les surfaces de plastiques traitées par plasma peuvent sembler être soudées convenablement par thermosoudage, mais que lorsque ces surfaces de plastique sont soumises ensuite à la stérilisation en autoclave, elles se séparent fréquemment (page 5, lignes 1 à 4). Le problème se complique encore lorsqu'il s'agit de souder une partie de feuille traitée par plasma sur un autre élément en PVC souple non traité, par exemple dans le cas de la soudure de poches destinée à contenir des liquides à usages médicaux (sang) avec leur tube (insert) d'alimentation : dans ce cas, les conditions opératoires conventionnelles du soudage de feuilles de PVC souple par haute fréquence se sont aussi révélées inadéquates (document cité, page 4, lignes 33 à 36).

La présente invention vise à fournir un procédé qui permet le soudage correct de feuilles de PVC souple lorsque la face de ces feuilles impliquée dans la soudure a subi un traitement de réticulation par plasma froid; appliqué à la fabrication de poches destinées à contenir des liquides à usages médicaux, le procédé permet, contre toute attente, d'obtenir des soudures résistant aux traitements de stérilisation en autoclave.

L'invention concerne dès lors un procédé pour le soudage

(a) d'une feuille de polychlorure de vinyle (PVC) souple dont la face impliquée dans la soudure a été soumise à un traitement par plasma froid générant une couche superficielle réticulée avec au moins

(b) un autre objet façonné également en PVC souple, caractérisé en ce que l'on développe au cours du soudage une combinaison d'énergie et de pression au moins suffisante pour désintégrer substantiellement la couche réticulée dans la soudure.

Selon l'invention, l'autre objet façonné peut être non seulement une autre feuille de PVC souple dont la face impliquée dans la soudure a aussi été soumise à un traitement par plasma froid, mais aussi un objet façonné quelconque à base de PVC souple non traité par plasma froid, tel que, par exemple, une autre feuille, un tube, etc.

Le PVC entrant dans la composition des feuilles et des autres objets façonnés soudables entre eux selon l'invention (ces feuilles et ces autres objets façonnés sont dénommés ci-après plus simplement "feuilles") peut être choisi parmi les homopolymères du chlorure de vinyle ou les copolymères contenant une proportion prépondérante (supérieure à 50 % en poids) de ce monomère. Ces copolymères sont obtenus par copolymérisation du chlorure de vinyle avec un ou plusieurs monomères copolymérisables tels que les esters vinyliques, par exemple l'acétate de vinyle; les éthers vinyliques, par exemple l'éther éthylvinylique; les acides acrylique et méthacrylique et leurs esters, par exemple l'acrylate de méthyle; l'acide fumarique et ses esters, par exemple le fumarate d'éthyle; l'acide maléique, son anhydride et ses esters, par exemple le maléate d'éthyle; les composés vinylaromatiques, par exemple le styrène; les halogénures de vinylidène, par exemple le chlorure de vinylidène; l'acrylonitrile; le méthacrylonitrile; les oléfines, par exemple l'éthylène.

Les feuilles soudables peuvent être à base de PVC différents ou, de préférence, à base du même PVC. Quoique la présence d'autres polymères thermoplastiques que le PVC dans les feuilles soudables selon l'invention ne soit nullement exclue, lesdites feuilles sont de préférence constituées essentiellement de PVC souple pouvant contenir les ingrédients décrits ci-après.

Le PVC constitutif des feuilles soudables contient dans tous les cas un plastifiant conventionnel, de manière à leur conférer la flexibilité souhaitée. Ce plastifiant est choisi en général parmi les esters de l'acide phtalique, tels que le dibutyl-, le dioctyl-, le di-2-éthylhexyl-, le diisodécyl- et le butylbenzylphtalate par exemple; parmi les esters de diacides aliphatiques, tels que le dioctylfumarate, le dioctyladipate et le dibutylsébaçate par exemple; parmi les esters de polyols, tels que les esters du pentaérythritol et les dibenzoates de diéthylène- et de dipropylèneglycols par exemple; parmi les esters d'acides gras, tels que l'acétylricinoléate de méthyle par exemple; parmi les esters de l'acide phosphorique, tels que le tricrésyl-, le triphényl- et le trinonylphosphate par exemple; parmi les huiles époxydées, telles que les huiles de soja et de lin époxydées par exemple; parmi les esters de l'acide citrique, tels que les citrates d'acétyltrioctyle et d'acétyltributyle par exemple; ou encore parmi les plastifiants à base de polyesters, tels que les trimellitates de triméthyle et de trioctyle, le pyromellitate de tétra-n-octyle et l'adipate de propylèneglycol par exemple.

Pour des raisons d'accessibilité et de coût, le plastifiant est choisi de préférence parmi les esters de l'acide phtalique, en particulier le dioctyl- et le di-2-éthylhexylphtalate. Si l'on vise en outre la compatibilité vis-à-vis du contenu de l'article obtenu par le procédé de soudage selon l'invention (poches à usage médical telles que poches à sang), on préfère utiliser, outre les plastifiants ci-dessus, ceux à base de polyesters, en particuliers le trimellitate de trioctyle.

Le PVC des feuilles soudables selon l'invention contient un ou plusieurs des plastifiants énumérés ci-dessus en des proportions comprises en général entre 10 et 90 parties, de préférence entre 30 et 75 parties, pour 100 parties en poids de PVC. Il peut bien entendu aussi contenir d'autres additifs conventionnels, tels que les stabilisants thermiques, les lubrifiants et agents antistatiques, les charges, les agents ignifugeants, les stabilisants à la lumière, les pigments, les colorants, les agents fongicides, les antioxydants, etc. Les feuilles peuvent être façonnées par n'importe quelle méthode conventionnelle de mise en oeuvre du PVC telle que le moulage par extrusion, le calandrage, le moulage par compression, le thermoformage, etc.

Comme mentionné ci-dessus, le procédé selon l'invention s'applique non seulement au soudage entre elles de feuilles de PVC souple via leurs faces préalablement traitées par plasma froid, mais aussi au soudage d'une pareille feuille avec un objet façonné quelconque, également à base de PVC souple, traité ou non par plasma froid. Tout ce qui est décrit en rapport avec le PVC entrant dans la composition des feuilles est dès lors applicable, mutatis mutandis, au PVC entrant dans la composition dudit objet façonné.

Selon l'invention, la face de la ou des feuilles de PVC souple impliquée dans la soudure est soumise à un traitement par plasma froid. Ce traitement consiste à exposer ladite face à une atmosphère de plasma à basse température de gaz inorganique. Pareil traitement peut être effectué, en discontinu ou en continu, dans une chambre à plasma équipée intérieurement d'électrodes y générant un plasma à basse température sous pression réduite par décharge luminescente, produite sous potentiel de décharge entre les électrodes, dans le gaz inorganique.

Le gaz inorganique en présence duquel le plasma à basse température est généré est choisi en général parmi l'hélium, le néon, l'argon, l'azote, l'oxygène, l'air, l'oxyde nitreux, le dioxyde d'azote, les mono- et dioxyde de carbone, le dioxyde de soufre, le sulfure d'hydrogène, l'hydrogène, le chlore, le fluor et le chlorure d'hydrogène. Ces gaz peuvent être utilisés seuls ou en mélanges. Parmi les gaz énumérés ci-dessus, l'argon, le monoxyde de carbone et l'oxygène conviennent bien.

La pression dans la chambre à plasma est généralement comprise entre 0,001 et 10 Torr, de préférence entre 0,01 et 5 Torr, afin d'assurer la stabilité de la décharge luminescente, obtenue par application d'une puissance électrique généralement comprise entre 10 W et 500 kW, sous une fréquence généralement comprise entre 50 Hz et 2,5 GHz, entre les électrodes.

La plage des fréquences pour la décharge électrique n'est pas limitée à la zone des hautes fréquences indiquée ci-dessus mais peut s'étendre au courant direct, à basse fréquence ou à microondes.

L'appareil générateur de plasma n'est pas limité à ceux comprenant une chambre équipée intérieurement d'électrodes, mais peut être du type à électrodes extérieures ou à électrode bobinée. Les électrodes peuvent être réalisées à un générateur à haute fréquence par couplage capacitif ou inductif. La forme des électrodes n'est pas particulièrement critique; l'électrode de puissance et l'électrode mise à la terre peuvent avoir la même forme ou des formes différentes, telles que des plaques, des tiges, des anneaux, des cylindres, etc. Il est fréquemment souhaitable que les murs intérieurs de la chambre à plasma soient métalliques pour exercer la fonction d'électrode, le plus souvent mise à la terre.

En tout état de cause, le traitement par plasma froid est conduit de manière à ce que la chaleur dégagée par la décharge électrique n'endommage pas la surface des feuilles qui y sont soumises.

Les conditions du traitement sont en outre choisies de manière à générer une couche superficielle réticulée d'épaisseur comprise entre 0,05 et 2 microns ($\mu$m), de préférence entre 0,1 et 1 $\mu$m, l'épaisseur des feuilles elles-mêmes étant en général comprise entre 0,1 et 1 mm, de préférence entre 0,15 et 0,50 mm. Une caractérisation assez détaillée de cette couche réticulée a été faite notamment dans le brevet US-A4337768 (TORAY INDUSTRIES), colonne 2, ligne 18 à colonne 3, ligne 14, dont le contenu est incorporé par référence dans la présente description.

Afin d'améliorer l'efficacité du traitement par plasma froid et donc diminuer encore le phénomène d'extraction du plastifiant, la couche traitée peut contenir un additif propre à améliorer les propriétés conférées par le traitement par plasma froid. Cet additif est choisi généralement parmi les agents accélérant la réticulation superficielle provoquée par le traitement par plasma froid et plus particulièrement parmi les agents de réticulation conventionnels. Les agents de réticulation généralement utilisés sont les organosilanes réticulables, les composés contenant des groupes allyliques et les esters des acides acrylique et méthacrylique.

Le soudage des feuilles selon l'invention peut être effectué selon n'importe quelle technique connue pour autant qu'elle puisse assurer la fourniture de la combinaison d'une énergie et d'une pression telle qu'elle désintègre substantiellement la (les) couche(s) réticulée(s) dans la soudure. Par "désintégration substantielle de la couche réticulée dans la soudure", on entend définir la disparition de la couche réticulée, dans la soudure, sur plus de 50 % de sa largeur totale et, de préférence, sur plus de 80 % de sa largeur totale. Dans les meilleures soudures, selon l'invention, la couche réticulée n'apparaît plus qu'aux extrémités latérales de la soudure. La portion de couche réticulée qui subsiste éventuellement dans la soudure se présente généralement sous la forme de tronçons discontinus.

Les définitions qui précèdent s'appliquent aux examens effectués sur des coupes transversales effectuées dans la soudure.

La présence et/ou l'absence, partielles ou totales, de la (des) couche(s) réticulée(s) dans la soudure s'apprécient par examen de cette dernière par microscopie électronique à transmission, sur des coupes cryoultramicrotomiques dans lesquelles la (les) couche(s) réticulée(s) éventuelle(s) est (sont) révélée(s) par teinture au tétroxyde d'osmium ($OsO_4$).

Lorsque la soudure est correcte selon les critères de l'invention, des tests de pelage effectués, selon la norme ASTM D 1876, sur des éprouvettes découpées et tirées dans le sens transversal de la soudure, n'entraînent aucun délaminage de cette dernière. De préférence, les soudures sont de qualité telle que leur résistance en traction mesurée selon la norme susmentionnée est supérieure à 70 N/25 mm. Les meilleures soudures se caractérisent par une résistance en traction, mesurée selon cette norme, supérieure à 100 N/25 mm. De manière surprenante, la qualité des soudures n'est pas affectée lorsque les articles obtenus à partir des feuilles soudées subissent des traitements ultérieurs (par exemple une stérilisation en autoclave lorsque ces articles sont des poches à usage médical).

L'énergie développée au cours du soudage peut être fournie sous n'importe quelle forme par n'importe quel dispositif de soudure connu. Ainsi, le soudage peut être effectué par une méthode bien connue du spécialiste en soudage des matières plastiques, à savoir le soudage mettant en oeuvre l'énergie des ultra-sons (soudage par ultra-sons).

On préfère toutefois effectuer le soudage des feuilles selon l'invention par la méthode conventionnelle à haute fréquence impliquant le chauffage diélectrique du PVC.

Les dispositifs de soudure à haute fréquence utilisables à cet effet ont des puissances nominales généralement comprises entre environ 500 et environ 6000 Watts (W), ce qui correspond à environ 20 à 200 W/cm$^2$ de surface d'électrode. Ils sont équipés d'électrodes froides ou thermostatisées ayant le profil souhaité, à partir de matériaux tels que le laiton, le bronze, l'aluminium, le cuivre et l'acier par exemple.

Selon l'invention, il est essentiel de désintégrer substantiellement la couche réticulée dans la soudure et donc de développer la combinaison d'une énergie et d'une pression suffisante dans le dispositif de soudure à cet effet. L'énergie et la pression à développer peuvent être déterminées aisément par l'homme du métier, connaissant l'objectif à atteindre et prenant en compte les caractéristiques propres au dispositif de soudure utilisé, fournies par le constructeur.

La prise en compte des paramètres ci-après peut faciliter la détermination de l'énergie à développer selon l'invention dans un dispositif de soudure à haute fréquence :

- la puissance totale appliquée aux électrodes; cette puissance résulte du produit de la puissance totale fournie par la source d'électricité du dispositif et de son rendement (donné par le constructeur du dispositif);
- le courant d'anode avec lequel la puissance totale appliquée aux électrodes est en relation;
- l'épaisseur initiale totale des feuilles à souder;
- la surface totale à soudure;
- le temps de soudure.

L'expérience a montré qu'un autre paramètre à prendre de préférence aussi en considération est la température des électrodes du dispositif de soudure.

A titre indicatif, on mentionne ci-après les valeurs que peuvent prendre divers paramètres impliqués dans l'utilisation de dispositifs de soudure à haute fréquence ayant les puissances nominales mentionnées plus haut (des modèles commercialisés de ces dispositifs sont par exemple la soudeuse COLPITT H.F. 3000 W et la soudeuse KIEFEL KH 500) :

- courant d'anode : d'environ 0,5 à environ 1,2 ampères (A);
- temps de soudure : d'environ 1 à environ 6 secondes (s);
- température des électrodes : réglée de manière que la température au coeur de la soudure ne dépasse pas de préférence environ 160°C, en particulier environ 140°C;
- pression appliquée entre les électrodes : d'environ $1.10^5$ à environ $2.10^6$ N/m², de préférence d'environ $3.10^5$ à environ $8.10^5$ N/m².

On mentionne ci-après des valeurs indicatives de l'énergie à développer dans les dispositifs de soudure à haute fréquence décrits ci-dessus; cette énergie peut être définie en première approximation sous forme d'une énergie volumique spécifique, par le rapport entre la puissance (en Watts) appliquée aux électrodes et le produit de l'épaisseur initiale totale des feuilles (en cm) par la surface totale de la soudure (en cm²); exprimée en Joules (J) par cm³ et par seconde, cette énergie volumique spécifique est généralement supérieure à 500; de préférence elle est supérieure à 700 J/cm³ x s.

Les éléments qui précèdent sont évidemment transposables à n'importe quel dispositif de soudure et permettent à l'homme du métier de déterminer, sans expérimentation excessive, l'énergie et la pression à développer pour obtenir une soudure répondant à la condition essentielle du procédé selon l'invention (désintégration substantielle de la couche réticulée dans la soudure). Il va également de soi que l'énergie et la pression développées au cours du soudage ne doivent pas atteindre des valeurs telles qu'elles entraînent une dégradation du PVC et/ou une épaisseur trop faible de la soudure.

Le procédé de soudage selon l'invention s'applique à la fabrication de poches en PVC pour le conditionnement de sang, ainsi que d'autres liquides à usages médicaux, tels que les solutions intraveineuses, les médicaments liquides, les solutions pour nutrition entérale, (aminoacides, lipides...), les solutions de lavement barytées, de poches à recueil pour colostomie ou nettoyage de dialyse, etc. Dans le cas de poches pour le conditionnement du sang, on peut avantageusement en améliorer l'hémocompatibilité, par exemple par addition d'un agent anticoagulant, tel que le citrate de soude, ou encore par enduction au moyen de solutions de polysiloxanes (voir par exemple demande de brevet européen EP-A-143994).

Les poches en PVC soudées selon l'invention conviennent particulièrement bien au conditionnement de solutions médicamenteuses qui subissent une perte substantielle du principe actif par absorption, ou même par simple adsorption, dans le PVC dont la surface n'a pas été traitée par plasma froid.

A titre de solutions médicamenteuses pouvant être conditionnées dans des poches en PVC soudées selon le procédé de l'invention sans perte significative du principe actif, on peut citer par exemple :

- les médicaments cytostatiques, tels que le sulfate de bléomycine, la carmustine, le sulfate de vincristine;
- les sédatifs et tranquillisants, tels que la prométhazine, la thioridazine, la trifluoropérazine, la clométhiazole, la chlorpromazine, la promazine, le diazépam, l'oxazépam, le medazépam, le nitrazépam;
- les médicaments cardiologiques, tels que la nitroglycérine, le dinitrate d'isosorbide, la digitoxine, l'hydralazine;
- les anticoagulants, tels que la warfarine;
- les anesthésiques, tels que le méthohexital sodique et le thiopental sodique;
- les médicaments pour nutrition entérale, tels que la vitamine B6, la vitamine A, les aminoacides;
- les insulines; etc.

Les soudures obtenues par le procédé selon l'invention se caractérisent par une résistance remarquable à tous les types de stérilisation (par autoclave, par oxyde d'éthylène, par irradiation gamma, etc.) et notamment par autoclave, pour lesquelles elles étaient, selon l'art antérieur, réputées ne pas convenir (voir plus haut).

La portée de l'invention sera mieux comprise grâce à la description qui va suivre d'une mode de réalisation pratique. Cette description concerne la réalisation d'une poche à sang via deux feuilles de PVC traitées par plasma et soudées via leurs faces traitées, et équipée d'un insert (tube) de PVC non traité par plasma pour le remplissage et la vidange de la poche, rendu solidaire de la poche, également par soudage.

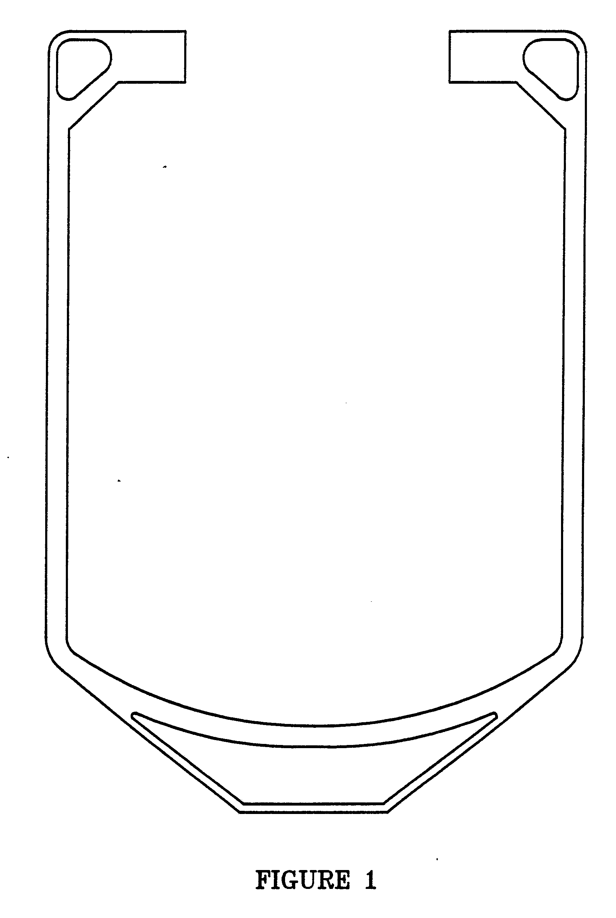

Cette description est donnée à titre illustratif et se réfère aux figures 1 à 4 annexées.

La figure 1 est une reproduction en grandeur réelle des électrodes en laiton utilisées ayant une configuration correspondant au périmètre de la poche à sang à souder.

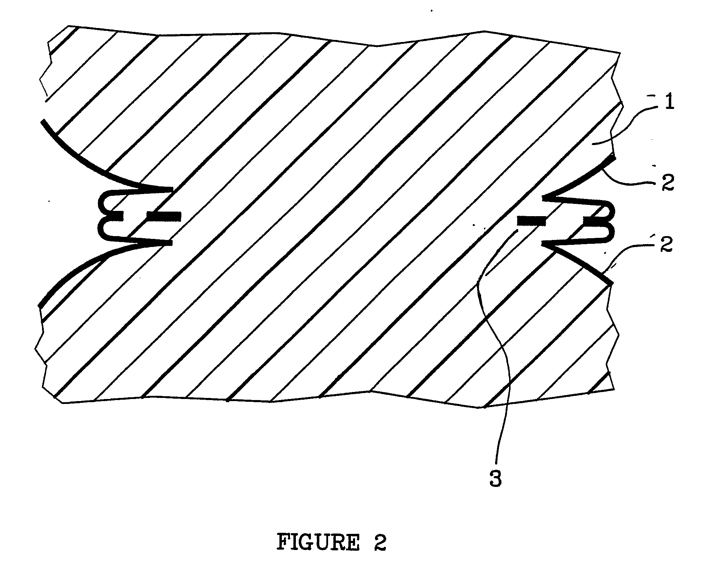

La figure 2 représente une coupe transversale réalisée dans une bonne soudure. On notera que pour illustrer de manière plus claire la matérialisation d'une bonne soudure, la zone soudée, d'une part, et la couche réticulée, d'autre part, n'ont pas été représentées à la même échelle : la largeur réelle de la soudure est d'environ 7,5 mm alors que les couches réticulées sont représentées à une échelle de l'ordre de 10000/1. Les deux feuilles en PVC souple (1) ont été placées de telle façon que la soudure a eu lieu via les deux faces traités par plasma froid. Dans la zone de soudure (3), les couches réticulées (2) sont donc en contact. On observe une désintégration substantielle des couches réticulées (2) dans la zone de soudure, dont seuls des tronçons discontinus subsistent aux extrémités latérales de la soudure.

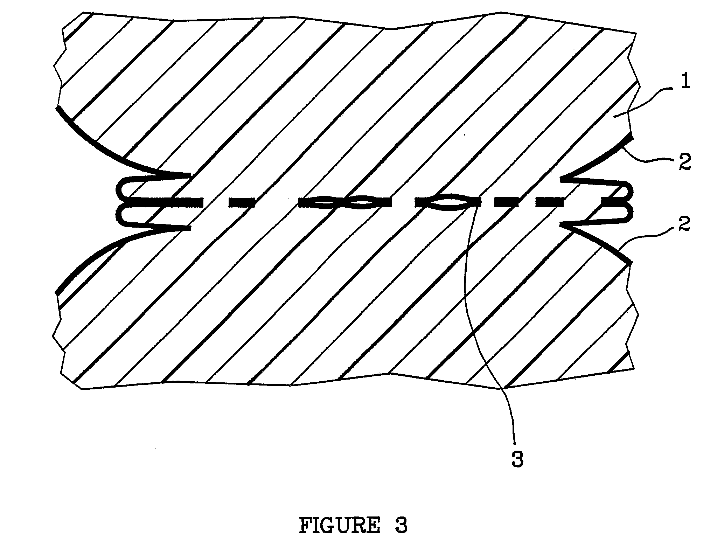

La figure 3 représente (avec les mêmes différences d'échelles que celles mentionnées pour la figure 2) une coupe transversale réalisée dans une mauvaise soudure. On n'observe qu'une disparition partielle (moins de 50 % de leur largeur totale) des couches réticulées (2) dans la zone de soudure (3).

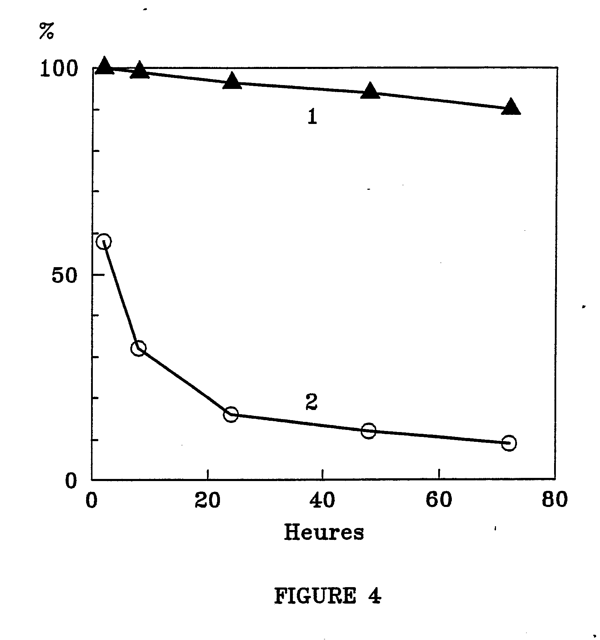

La figure 4 est un diagramme illustrant l'évolution de la concentration résiduelle d'un médicament de la famille des tranquillisants, le diazépam (sous forme dissoute à raison de 92 µg/ml dans une solution saline à 9 % ₒ ), conditionné dans une poche en PVC souple traité par plasma froid soudée selon l'invention (courbe (1)) et dans une poche en PVC souple non traité soudée de manière conventionnelle (courbe (2)).

Pour la réalisation des poches à sang, on prépare des feuilles de 0,35 mm d'épaisseur par extrusion d'une composition comprenant :

(a) 100 parties en poids de PVC,

(b) 50 parties en poids de phtalate de di-2-éthyle-hexyle,

(c) 6 parties en poids d'huile de soja époxydée,

(d) 0,6 partie en poids d'un système stabilisant contenant du calcium et du zinc.

Une face des feuilles est ensuite soumise à un traitement par plasma froid généré dans la chambre à plasma d'un appareil générateur de plasma à basse température par application d'un courant électrique d'une puissance de 8 kW sous une fréquence de 110 kHz, l'atmosphère de la chambre à plasma étant maintenue à une pression de $4.10^{-2}$ Torr avec admission et décharge continue d'un mélange gazeux comprenant un mélange de CO, d'oxygène et d'argon.

Les feuilles traitées par plasma ont été examinées par microscopie électronique à transmission sur des coupes microtomiques. Les coupes sont soumises pendant une durée de 16 heures, à température ambiante, aux vapeurs de tétroxyde d'osmium en solution aqueuse à 1 %. La couche traitée plasma apparaît de manière continue et avec une épaisseur régulière de 0,1 micron à la surface de la feuille traitée par plasma.

Le soudage à haute fréquence des feuilles traitées par plasma froid est réalisé sur une machine KIEFEL KH 500 HF. Les deux feuilles sont placées entre des électrodes en laiton ayant une configuration correspondant au périmètre de la poche à sang à souder, représentée sur la figure 1, de telle façon que la soudure ait lieu via les deux faces traitées des feuilles respectives.

Les conditions de soudure utilisées sont les suivantes :
- temps de soudure : 5s,
- fréquence utilisée : 27,12 MHz,
- courant d'anode : 1,2 A,
- pression entre les électrodes lors de la soudure : $4,5.10^5$ N/m².

L'épaisseur de la soudure finale est égale à 0,35 mm. La puissance totale appliquée aux électrodes était égale à 4400 W, l'épaisseur initiale totale des feuilles à souder 0,7 mm et la surface totale de la soudure 56 cm². La quantité d'énergie volumique spécifique développée pendant la réalisation de la soudure est donc égale à 1122 J/cm³ x s.

L'examen par microscopie électronique à transmission sur des coupes microtomiques de la soudure traitées aux vapeurs de tétroxyde d'osmium révèle la désintégration substantielle de la couche plasma; celle-ci apparaît comme le montre la figure 2, commentée plus haut.

La qualité de la soudure est appréciée par un test de pelage effectué suivant la norme ASTM D 1876. Des éprouvettes de 25 mm de largeur sont découpées dans le sens transversal de la soudure. Le test de pelage a donné une force de pelage de 115 N/25 mm.

La réalisation de la poche à sang est complétée par la soudure des deux feuilles traitées par plasma froid et déjà soudées dans une configuration correspondant au périmètre de la poche à sang avec un tube (insert) en PVC souple non traité de diamètre inférieur de 5 mm et de diamètre extérieur de 7 mm. La soudure est réalisée en deux étapes. Dans la première étape, on réalisé la soudure entre l'insert et les deux feuilles traitées par plasma froid au niveau de l'insert, par l'intermédiaire de deux électrodes de géométrie cylindrique mises sous tension et d'une tige placée à l'intérieur de l'insert et reliée à la masse, dans les conditions particulières mentionnées plus haut pour la soudure des feuilles (puissance totale appliquée : 700 W).

L'épaisseur de la soudure finale est égale à 0,9 mm, l'épaisseur initiale totale 1,35 mm et la surface totale de la soudure 4 cm². La quantité d'énergie volumique spécifique développée pendant la réalisation de la soudure est donc égale à 1296 J/cm³ x s.

Pendant la deuxième étape, on réalise la soudure des deux parties de feuilles situées de part et d'autre de l'insert dans des conditions opérations similaires à celles utilisées pour la réalisation de la soudure des deux feuilles traitées plasma décrite précédemment.

La qualité de la soudure de l'insert est appréciée par un test mécanique effectué suivant le projet de norme internationale ISO/DIS 3826.3. Selon ce test, l'insert doit pouvoir subir une force de traction de 20 N, appliquée à son point de raccordement et maintenue pendant 15 secondes. Les échantillons examinés, dont les inserts ont été soudés dans les conditions décrites précédemment, ont résisté à une force de traction de 20 N pendant 24 heures sans aucune perte du liquide au niveau de l'insert.

La poche à sang ainsi réalisée, dans laquelle on a introduit 10 ml d'eau, est soumise à un cycle de stérilisation en autoclave à 120°C pendant 30 minutes, avec maintien d'une contre-pression pendant toute la durée du cycle. A l'issue de ce cycle de stérilisation, on la soumet à un test de pelage suivant la norme ASTM D 1876 comme décrit plus haut. Le test a donné une force de pelage de 112 N/25 mm, ce qui montre que la qualité de la soudure n'a pas été affectée par la stérilisation.

Enfin, une poche à sang réalisée comme indiqué ci-dessus et une autre poche réalisée à base des mêmes feuilles de PVC non traitées par plasma et soudées de manière conventionnelle (voir ci-après) sont remplies de diazépam dissous à raison de 92 µg/ml dans une solution contenant 9 g de NaCl par litre. La figure 4 commentée plus haut montre les évolutions respectives de la concentration résiduelle de diazépam durant le stockage dans chacune des poches.

A titre de comparaison, on a répété les opérations de soudage des deux feuilles décrites plus haut, sauf que le courant d'anode a été réglé de manière à atteindre en fin de soudure la valeur maximale de 0,65 A. Dans ces conditions, la puissance totale appliquée aux électrodes a été de 1700 W et la quantité d'énergie volumique spécifique développée pendant le soudage a été 434 J/cm³ x s.

L'examen par microscopie électronique à transmission sur des coupes microtomiques de la soudure traitées aux vapeurs de tétroxyde d'osmium révèle la persistance de la couche traitée plasma d'une façon discontinue dans la soudure comme le montre la figure 3, commentée plus haut.

Le test de pelage suivant la norme ASTM D 1876 a donné une force de pelage de 62,6 N/25 mm seulement.

Il est à souligner que les opérations de soudage telles que répétées ci-dessus, qui ne se révèlent pas conduire à des soudures de qualité satisfaisante lorsque les feuilles de PVC à souder ont été traitées par plasma froid, conduisent néanmoins à de bonnes soudures lorsque ces mêmes feuilles n'ont pas été traitées, toutes autres conditions étant identiques. En effet, le test de pelage a donné dans ce dernier cas (c'est-à-dire pour la soudure des feuilles non traitées) une force de pelage de 80,3 N/25 mm.

## Revendications

1 - Procédé pour le soudage :
   (a) d'une feuille de polychlorure de vinyle souple dont la face impliquée dans la soudure a été soumise à un traitement par plasma froid générant une couche superficielle réticulée avec au moins
   (b) un autre objet façonné également en PVC souple, caractérisé en ce que l'on développe au cours du soudage une combinaison d'énergie et de pression au moins suffisante pour désintégrer substantiellement la couche réticulée dans la soudure.

2 - Procédé selon la revendication 1, caractérisé en ce que l'autre objet façonné à base de polychlorure de vinyle souple est une feuille dont la face impliquée dans la soudure a aussi été soumise à un traitement par plasma froid.

3 - Procédé selon la revendication 1, caractérisé en ce que l'autre objet façonné n'a pas été soumis à un traitment par plasma froid.

4 - Procédé selon l'une quelconque des revendications 1 à 3, caractérisé en ce que la soudure obtenue présente une résistance en traction, mesurée par test de pelage selon la norme ASTM D 1876, supérieure à 70 N/25 mm après stérilisation en autoclave.

5 - Application du procédé selon l'une quelconque des revendications 1 à 4 à la réalisation de poches à usage médical.

6 - Application du procédé selon l'une quelconque des revendications 1 à 4 à la réalisation de poches à sang munies d'un insert.

7 - Application du procédé selon l'une quelconque des revendications 1 à 4 à la réalisation de poches pour le conditionnement de solutions médicamenteuses dont le principe actif diffuse dans le polychlorure de vinyle souple.

FIGURE 1

FIGURE 2

FIGURE 3

FIGURE 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | FR-A-2 544 612 (TERUMO K.K.) <br> * Page 4, ligne 31 - page 5, ligne 22; page 9, lignes 4-25; figure 3B * <br> --- | 1-7 | C 08 J 5/12 <br> B 29 C 65/02 <br> A 61 J 1/00 |
| A | EP-A-0 035 065 (TORAY INDUSTRIES) <br> * Page 14, lignes 19-23 * & US-A-43 37 768 <br> --- | 1-7 | |
| A | US-A-4 497 857 (BONIS) <br> * Colonne 2, lignes 25-28 * <br> --- | 1-7 | |
| A | GB-A-1 059 554 (BAXTER LABORATORIES) <br> * Page 2, lignes 63-83; figure 4 * <br> --- | 1-7 | |
| A | DERWENT JAPANESE PATENTS GAZETTE, section Ch, semaine 8406, 21 mars 1984, page 8, Derwent Publications LTD, Londres, GB; JP-A-58 224 745 (MITSUBISHI MONSANTO K.K.) 27-12-1983 <br> * Classe A, page 8, no. 84-034196/06 * <br> ----- | 1 | |

**DOMAINES TECHNIQUES RECHERCHES (Int. Cl.4)**

C 08 J
B 29 C
A 61 J

Le présent rapport a été établi pour toutes les revendications

| Lieu de la recherche | Date d'achèvement de la recherche | Examinateur |
|---|---|---|
| LA HAYE | 23-01-1989 | ATTALLA G. |